# EUROPÄISCHE PATENTSCHRIFT

(11) **EP 1 274 300 B1**
(45) Veröffentlichungstag und Bekanntmachung des Hinweises auf die Patenterteilung: **23.08.2006**
(21) Anmeldenummer: 01923708.0
(22) Anmeldetag: 31.03.2001
(51) Int. Cl.: A01M 1/20, A01M 1/14

(54) **INSEKTENFANG- UND VERNICHTUNGSSYSTEME**
SYSTEMS FOR TRAPPING AND DESTROYING INSECTS
SYSTEMES DE CAPTURE ET DE DESTRUCTION DES INSECTES

(30) Priorität: 18.04.2000 DE 10019068
(43) Veröffentlichungstag der Anmeldung: 15.01.2003
(73) Patentinhaber: ECS Environment Care Systems GmbH, 56626 Andernach (DE)
(72) Erfinder: FELDHEGE, Michael, 56068 Koblenz (DE); KLOCZKO, Malgorzata, 53577 Neustadt/Wied (DE); ROREGER, Michael, 56567 Neuwied (DE)
(74) Vertreter: Schmidt, Werner
(86) Internationale Anmeldenummer: PCT/EP2001/003691
(87) Internationale Veröffentlichungsnummer: WO 2001/078502

(56) Entgegenhaltungen:
- US-A- 3 653 145
- US-A- 4 411 093
- US-A- 4 992 268
- US-A- 5 778 636
- PATENT ABSTRACTS OF JAPAN vol. 1996, no. 06, 28. Juni 1996 (1996-06-28) & JP 08 051909 A (C I KASEI CO LTD), 27. Februar 1996 (1996-02-27) in der Anmeldung erwähnt

## Beschreibung

Die Erfindung betrifft ein pigmenthaltiges, flächenförmiges System für das Fangen und/oder die Vernichtung von Insekten, das dadurch gekennzeichnet ist, daß die darin enthaltenen Pigmente eine weibchenspezifische Insektenlockwirkung haben, welche durch die Emission eines Lichtreizes mit einer definierten Wellenlänge erzeugt wird.

Insektensysteme, die Pigmente enthalten, sind bereits bekannt. Sie gelangen hauptsächlich in klebenden Fallen unterschiedlicher geometrischer Ausgestaltung in der Schädlingsbekämpfung zur Anwendung (Insektenmonitoring und -massenfang).

Die Wirkung der in diesen Insektenfallen enthaltenen Pigmenten beruht grundsätzlich auf zwei Prinzipien:

### 1. Reizwirkung durch Farben

Farb- oder Lumineszenzeffekte (Erzielen einer Lockwirkung auf Insekten durch Einsatz von Farbpigmenten nicht definierter Wellenlänge).

### 2. Reizwirkung durch Formen

Oberflächenstrukturen bzw. Farbkontraste (Erzielen einer Lockwirkung auf Insekten durch geometrische Orientierungs- bzw. Navigationshilfen)

Zu der ersten Gruppe zählen Fangsysteme, die sich die visuelle Reizwirkung von Farben auf Insekten zunutze machen. So werden in den Dokumenten US 4 411 093, US 4 577 434, US 4 908 980, US 5 884 801, US 5 778 636, US 5 713184, US 5 713 183, US 5 517 802, JP 8 051 909, FR 2 468 305, TW 272 962, EP 367 539 Insektenfangsysteme beschrieben, in denen Farbpigmente unterschiedlicher Wellenlänge zur Fangwirkung beitragen.

Die zweite Gruppe umfaßt Fangsysteme, die sich das Orientierungs- bzw. Navigationsbedürfnis der Insekten zunutze machen. In den Dokumenten EP 0 475 665, EP 0 446 464, WO 97/01 272, WO 98/42 186 wird beschrieben, welche geometrischen Muster und Farbkontraste von Insekten erkannt werden und zum Erzielen einer Lockwirkung beitragen.

Vertreter beider Gruppen sind entweder durch auffällige Farbwahl (z.B. Gelb- oder Blautafeln), auffällige Farbkontraste in unterschiedlicher Anordnung (z.B. schwarzweiße Streifen), Leuchten unter lichtarmen Bedingungen oder durch Kombination der genannten Merkmale charakterisiert. Es ist bekannt, daß die Lichtsinnesrezeption des Menschen einem anderen Mechanismus folgt als dies bei Insekten der Fall ist. Darüber hinaus nimmt jede Insektenart Lichtreize unterschiedlicher Wellenlänge wahr. Dem Stand der Technik entsprechend war daher in der Vergangenheit der Versuch unternommen worden, durch geeignete Farb- und Formenwahl Wellenlängen oder Orientierungshilfen zu erzeugen, die dazu führen sollten, daß sich gewisse lästige oder schädliche Insektenarten zu einem Fangsystem hin orientieren.

In der Praxis der Schädlingsbekämpfung ist die Anwendung von Insektenfangsystemen aus den beiden o.g. Gruppen mit den folgenden Nachteilen behaftet:
■ Keine weibchenspezifische Erfassung einer Zielinsektenart möglich (Massenfang ist im Regelfall nicht möglich, da eierlegende Insektenweibchen nicht erfaßt werden, das Vermehrungspotential kommt ungebremst zum Tragen - Befallsprognosen für die Terminierung von Insektizidapplikationszeitpunkten und -intervallen werden häufig vom "männlichen und damit falschen Geschlecht" abgeleitet und sind deshalb in der Regel ungenau und unzuverlässig)
■ Keine ausreichende Fangwirkung (Abweichungen zwischen emittiertem Wellenspektrum und artspezifischer Farbempfindung bzw. Reizwirkung sowie zwischen selektierten geometrischen Formen und artspezifischer Kontrastwahrnehmung bewirken eine allgemein zu geringe Lockwirkung)
■ Keine Unterscheidung zwischen schädlichen/lästigen und nützlichen Insekten möglich (unerwünschte Nebenfänge von Nutzorganismen wie Bienen, Hummeln, Florfliegen etc.)

Aufgrund der genannten Nachteile sind Pigmente enthaltende, lockaktive Insektenfangsysteme zum Fangen und/oder Vernichten von Insekten nach dem derzeitigen Stand der Technik von ihrer Funktionalität her für das Fangen bzw. Vernichten von weiblichen Insekten unbrauchbar. Die folgenden Aspekte verdeutlichen, weshalb eine weibchenspezifische Insektenerfassung bzw- - vernichtung von herausragender ökonomischer und ökologischer Bedeutung ist.

### Weibchenspezifische Insektenerfassung

### a) Pflanzenschutz (Freiland-Anwendungen)

Noch bis vor etwa 10 Jahren galt eine der Hauptforderungen der möglichst umfassenden Vernichtung sämtlicher vorhandener Insektenarten in landwirtschaftlichen Produktionssystemen. Zunehmendes Artensterben bei Insekten, ein stetiger Rückgang der Artenvielfalt bei Nutzarthropoden, eine immer schwächer werdende Bestäubungsleistung insbesondere durch geschädigte Bienen- und Hummelvölker sowie Folgeschäden bei Insektenvertilgern wie Vögel, Igel etc. durch Sekundärvergiftungen waren Auslöser für einen grundlegenden Sinneswandel. Heute gelten sämtliche Anstrengungen der Suche nach möglichst giftarmen bzw. - freien Insektenbekämpfungssystemen, wobei diese den Anspruch haben, eine möglichst selektive, nützlingsschonende Wirkung zu entfalten. Die Synthese naturidentischer Sexuallockstoffe (Pheromone zur Anlockung von Insektenmännchen) hat Monitoring- und Bekämpfungsstrategien bereits in positiver Weise beeinflußt (Prognose- und Attract & Kill-Verfahren), jedoch wurde bislang kein erfolgversprechender Ansatz verfolgt, wonach Insekten weiblichen Geschlechts sicher angelockt und vernichtet werden können.

Insektenweibchen tragen nach erfolgter Begattung weitaus entscheidender zur Populationserhöhung bzw. -verbreitung und damit der Befallsstärke bei als dies Insektenmännchen tun. Sowohl "direkte Gegenmaßnahmen" (Massenfang, Attract & Kill) als auch "indirekte Maßnahmen" (Insektizideinsätze nach erfolgter Prognose basierend auf Insekten-Fallenfängen) müssen auf einer weibchenspezifischen Anlockung und Erfassung beruhen (Festhalten der adulten Weibchen auf klebenden Matrices oder Vernichten durch Kontaktinsektizide), da die Parameter Eiablage, Larvenschlupf und -entwicklung, Verpuppung und Schlupf der Imagines direkt an Aufkommen und Aktivität weiblicher und nicht männlicher Insekten geknüpft sind. Es ist bekannt, daß Aktivitätsphasen bei männlichen Insekten insbesondere von Sexuallockstoffen gesteuert werden, welche von geschlechtsreifen Weibchen abgesondert werden. Insektenweibchen besitzen hingegen eine ausgeprägte LichtSinnesrezeption, welche bei adulten Tieren Beginn und Dauer der Begattungsbereitschaft und nachfolgende Eiablage bestimmt. Das Einleiten der Aktivitätsphase weiblicher Insekten erfolgt artspezifisch in Abhängigkeit von der Tageszeit.

Aufgabe der vorliegenden Erfindung ist daher, ein freilandtaugliches Insektenvernichtungssystem zu schaffen, das die oben erwähnten Nachteile der bereits bekannten Pigmente enthaltenden lockaktiven Insektenfangsysteme vermeidet.

Diese Aufgabe wird erfindungsgemäß gelöst durch die Bereitstellung eines Insektenfang- bzw. -vernichtungssystems mit welchem unter Verwendung von foto- und filterhaltiger Pigmente Lichtspektren mit weibchenspezifischer Insektenlockwirkung erzeugt werden können.

### b) Hygiene-, Material und Vorratsschutz (Innenraum-Anwendungen)

Insbesondere in sensiblen Objekten, an welche höchste Hygieneanforderungen gestellt werden und Verunreinigungen jeglicher Art auszuschließen sind (z.B. in Privathaushalten, Lebensmittel-, Pharma-, oder Computerzulieferindustrie aber auch in der Vorratslagerung) wird seit Einführung verschärfter Hygienebestimmungen, geregelt durch Biozid-Produkte-Richtlinie, EU-Recht-Richtlinie 93/43 LMH, LMHV, Lebensmittel- und Bedarfsgegenständegesetz, Technische Regeln TRGS-523 in Hinblick auf Schädlingsauftreten ein entsprechendes Schädlingsmanagement (Monitoring, Bekämpfung, Dokumentation) sowie Nulltoleranzen gefordert. Dieser Forderung kann derzeit nur dadurch nachgekommen werden, daß nach wie vor toxische, häufig breitenwirksame Wirkstoffe eingesetzt werden, die in vielen Fällen Nebenwirkungen auf Bewohner der behandelten Innenräume (Menschen und Haustiere) nach sich ziehen. Giftfreie bzw. giftarme Insektenmonitoring- und Vemichtungssysteme basieren auf, dem derzeitigen Stand der Technik entsprechenden, lockenden Vernichtungssystemen; diese können jedoch den geforderten Ansprüchen nur in äußerst begrenztem Umfang gerecht werden, da in der Regel nur ein Teil der vorhandenen Schädlinge erfaßt bzw. vernichtet wird. Pigmente enthaltende Insektenweibchen-Fallensysteme könnten in der Kombination mit männchenspezifischen Pheromonfallen die Gesamtfangleistung signifikant erhöhen und über eine mittelfristige Eliminierung vorhandener Insekten hinausgehend auch eine kurzfristige Verhinderung der Schädlingsvermehrung nach Eiablage durch vorhandene oder eindringende Insektenweibchen sicherstellen. Ein positiver Nebeneffekt artgenauer Insektenweibchen-Fallen bzw. -vernichtungssysteme ist dabei ein einfaches Feststellen der vorhandenen Insektenart, des Insektenaufkommens in Zeit und Raum und davon abgeleitet das Einleiten selektiver Gegen- bzw. Bekämpfungsmaßnahmen (Art, Terminierung und Dauer erforderlicher Insektizidapplikationen).

Es ist daher Aufgabe der vorliegenden Erfindung, ein Insektenvernichtungs bzw. -fangSystem zu schaffen, das die oben genannten Nachteile der bereits bekannten, Pigmente enthaltenden lockaktiven Insektenfangsysteme für Innenraumverwendungen vermeidet.

Diese Aufgabe wird erfindungsgemäß gelöst durch die Bereitstellung eines Insektenfang- und/oder Insektenvernichtungssystems, mit welchem unter Verwendung fotoaktiver Pigmente allein oder in der Kombination mit foto- und filteraktiven Pigmenten Lichtreize mit weibchenspezifischer Insektenlockwirkung erzeugt werden können.

Das erfindungsgemäße System besteht im wesentlichen aus einer ein- oder mehrschichtigen Polymermatrix. Bevorzugt sind ein oder zwei Polymerschichten.

Als geeignete Polymere kommen für adhäsive Systeme diejenigen in Frage, die sich durch ein hohes Soforthaftvermögen auszeichnen. Dies stellt sicher, daß auch kleine oder stark beschuppte Insektenweibchen nach kurzem Kontakt mit der Haftkleberschicht sicher kleben bleiben. Derartige haftklebenden Eigenschaften lassen sich vom Fachmann durch gezielte Auswahl der Ausgangskomponenten erzielen.

Bevorzugt werden insbesondere haftklebende Polymere wie Mischpolymerisate aus Acrylsäure und Acrylsäureestern verwendet, insbesondere Acrylsäurealkylester wie 2-Ethylhexylacrylat oder n-Butylacrylat . Bei nicht haftklebenden Copolymerisaten wie z.B. Polystyrolisoprenstyrol, Polystyrolbutadienstyrol, Polyethylenvinylacetat und Polyethylenacrylsäureester müssen zur Erzielung der gewünschten Eigenschaften geeignete Hilfstoffe zugesetzt werden. Hierzu dienen insbesondere harzartige Stoffe wie Kolophonium und dessen Derivate, Polyterpene und Kohlenwasserstoffharze. Dabei ist von entscheidender Bedeutung, daß der Kleber auch nach Zusatz der Klebrigmacher nach wie vor geruchlos bleibt, damit die pigmentbedingte Lockwirkung nicht durch olfaktorische Nebenwirkungen beeinträchtigt wird. Hierzu eignen sich in besonderer Weise HYDROGRAL® M und HYDROGRAL® MA (Methylharzester des hydrierten Kolophoniums).

Zur Herstellung nicht-adhäsiver Systeme wird durch Polymerisation von Polyacrylsäure nach Zugabe zu entmineralisiertem Wasser ein stark verzweigtes, stabiles Polymer erzeugt. Bevorzugter Vertreter dieser Hydrogelbildner ist CARBOPOL® Ultrez 10, der nach Zugabe von Natronlauge, einer ölhaltigen Komponente (z.B. Raps- oder Sesamöl), einem Emulgator (z.B. TWEEN 20 oder Lecithin) und Saccharose die Basis für eine geeignete *Attract & Kill* Formulierung bietet.

Als fotoaktive Pigmente kommen solche in Frage, die nach Anregung durch externe Lichtquellen (Sonnenlicht, künstliche Lichtquellen) Lichtwellen mit genau definierter Wellenlänge emittieren.
Dafür geeignet sind die zur Gruppe der Erdalkalialuminate zählenden fotoaktiven Pigmente. Sie sind thermostabil- und abbaubeständig und eignen sich daher in idealer Weise zur Herstellung langnachleuchtender Insektenweibchen-Klebefallen- oder vernichtungssysteme mit spezifischer Wellenlänge. Derartig ausgerüstete Systeme emittieren ein spezifisches Lichtspektrum, mit welchem sich nach der natürlichen tageslichtabhängigen Aktivitätsphase der Insektenweibchen ein künstlicher, weibchenspezifischer Licht- bzw. Lockreiz auf eine bestimmte Insektenart erzeugen läßt. Lumineszente Pigmente mit geeigneten, ausgeprägten Nachleuchteigenschaften sind z.B. Pigmente aus der LUMILUX®⁻Reihe von Riedel-de-Haën (Grün SN-CR, Grün SN-F2, Blaugrün SN, Effekt Blau N, Effekt Sipi Gelb SN, Effekt Sipi Orange, Effekt Rot N 40).

Besonders bevorzugt sind Grün SN F2, Blaugrün SN sowie Effekt Sipi Rot.

Filteraktive Pigmente weisen je nach Beschaffenheit und Konzentration charakteristische, das emittierte Lichtspektrum beeinflussende Eigenschaften auf, indem sie selektiv Lichtstrahlen passieren lassen oder diese zurückhalten. Die zur Gruppe der lichtabsorbierenden Substanzen zählenden filteraktiven Pigmente lassen die für die weibchenspezifische Lockwirkung verantwortlichen Lichtwellen, erzeugt durch die verwendeten, fotoaktiven Pigmente passieren. Unspezifische, störende oder indifferente Lichtwellen (unerwünschte Teile des emittierten Lichtspektrums) werden von den filteraktiven Pigmenten absorbiert und selektiv zurückgehalten. Filteraktive Pigmente können daher in idealer Weise zur Feinjustierung des emittierten Lichtreizes eingesetzt werden und ermöglichen hierdurch eine weibchenspezifische Lockwirkung auf die Zielinsektenarten. Filteraktive Pigmente sind z.B. Lithopone wie Barium- oder Zinksulfat sowie Zinkoxide, Calciumsilikate oder Titanoxide.

Besonders bevorzugt für die erfindungsgemäßen Systeme sind insbesondere Titandioxid und Zinkoxid, da diese über eine ausgeprägte Absorptionskraft für Lichtwellen im dafür in Frage kommenden Lichtwellenbereich verfügen.

Die erfindungsgemäßen Systeme emittieren ein Lichtspektrum im Bereich zwischen 200 und 800 nm, bevorzugt zwischen 300 und 650 nm, ganz besonders bevorzugt zwischen 340 und 610 nm.

Die verwendeten Pigmente liegen erfindungsgemäß in dispergierter Form in der Polymermatrix. Bevorzugt sind dabei "Controlled Release"-Formulierungen, die dafür sorgen, daß die von den dispergierten Pigmentpartikeln freigesetzten Lichtwellen in konstanter, kontrollierter Weise an die Oberfläche des erfindungsgemäßen Systems gelangen und an die Umgebung freigesetzt werden. Solche Formulierungen werden durch ein- oder mehrschichtigen Systemaufbau erzeugt, wobei in die als "Lichtreizquelle" fungierende Schicht filteraktive Substanzen direkt eingebettet sind oder von einer oder mehreren filteraktiven Schichten ummantelt wird, die ausschließlich weibchenspezifische Lichtwellen passieren lassen.

Die Oberfläche der erfindungsgemäßen Polymermatrix kann bekannterweise adhäsiv, also klebend ausgerüstet sein. Erfindungsgemäße Systeme, die mit einer solchen Oberfläche versehen sind, eignen sich zum Fangen von Insekten. Mit Polymermatrices beschichtete Trägermaterialien können auch durch Falten in verschiedene geometrische Formen überführt, bevorzugt z.B. in Form von Gehäusen unterschiedlicher Ausgestaltung gebracht werden. Durch derartige Maßnahmen wird die Lockwirkung und das Fangergebnis der durch die Pigmente erzeugten Lichtemission zusätzlich verstärkt.

Die erfindungsgemäßen Systeme sind insbesondere geeignet, Insektenweibchen der Ordnungen Lepidoptera, Diptera, Coleoptera, Homoptera, Heteroptera und Apterygota anzulocken und zu vernichten.

Die erfindungsgemäßen Systeme können auf die im folgenden beschriebene Weise hergestellt werden.

### Beispiel: Adhäsive Systeme (Monitoring, Massenfang)

In einem temperierbaren Heißschmelzbehälter werden Pellets (22 Gewichtsanteile) eines Ethylen-Acrylsäure-Copolymerisats (LOTRYL 35 BA 40, erhältlich bei ELF ATOCHEM) mit 40 Gewichtsanteilen eines Phtalsäureesters von technischem Hydroabietylalkohol (CELLOLYN 21-E) und 22 Gewichtsanteilen eines teilhydrierten Kolophoniumesters (HERCOLYN D-E) bei 120°C aufgeschmolzen und homogen vermischt. Die so erzielte Plazeboschmelze wird unter Rühren in Schritten von 4°C auf 90°C abgekühlt. Je nach der zu erzeugenden Wellenlänge wird der Schmelze nun ein Gemisch aus foto- und filteraktiven Pigmenten mit insgesamt 16 Gewichtsanteilen durch langsames Einrühren zugesetzt. Das puderförmige Pigmentgemisch kann z.B. aus 14 Gewichtsanteilen des Pigmentes LUMILUX Grün SN FN (erhältlich bei Riedel-de-Haen) mit einem mittleren Pigmentdurchmesser von 25 µm und 2 Gewichtsanteilen der filteraktiven Substanz Titandioxid bestehen (erhältlich bei Sigma-Aldrich Chemie). Nachdem eine gleichmäßige Partikelverteilung in der Schmelze erreicht ist, wird eine transparente Polystyrolfolie mittels intermittierendem Hotmelt-Auftragsverfahren bei einem Flächengewicht zwischen 100 und 200 g/m² mit dem pigmenthaltigen Haftschmelzkleber beschichtet. Direkt nach dem Erkalten wird ein silikonisiertes Abdeckpapier auflaminiert. Das so erzeugte Laminat wird an den Haftschmelzkleberzwischenräumen mit einer Schneidwalze in gleich große rechteckige Stücke geschnitten, so daß eine anwenderfreundliche Anfaßhilfe durch umseitigen klebfreien Rand entsteht. Die so gefertigten "Weibchen-Lockstoffklebeböden" (170 x 100 mm, Haftklebefläche 80 x 150 mm) können ohne gasdichte Umverpackung gelagert werden (Lockstoffpigmente sind nicht flüchtig, sondern verbleiben dauerhaft in der klebenden Polymermatrix), bevor sie in Deltafallengehäuse (230 x 200 mm) zu Monitoring- oder Massenfangzwecken eingesetzt werden.

### Beispiel: Nicht-adhäsive Systeme (Attract & Kill)

In einem temperierbaren Masseansatzbehälter (Hersteller: BECOMIX) werden 60 Gewichtsanteile Wasser auf 90°C erwärmt und mit 1,5 Gewichtsanteilen CARBOPOL® Ultrez 10 versetzt. Zum Neutralisieren wird nachfolgend Natronlauge (2 mol, 4 Gewichtsanteile) zugegeben, so daß eine hochviskose Dispersion entstehen kann. Nach etwa 15 Minuten Rühren werden 3,5 Gewichtsanteile Saccharose und 17 Gewichtsanteile Rapsöl zugesetzt. Die Zugabe von 4 Gewichtsanteilen eines Emulgators (TWEEN 20) verhindert nachträgliches Trennen der lipophilen und lipophoben Massekomponenten. Anschließend werden 4,3 Gewichtsanteile des Pigmentes LUMILUX Grün SN FN und 0,7 Gewichtsanteile der filteraktiven Substanz Titandioxid zugegeben. Die Temperatur der Masse wird bei weiterem Rühren (ca. 45 Minuten) schrittweise auf 75 °C abgesenkt. Der pigmenthaltigen Placebomasse werden vor dem Abpumpen in einen Streichkasten über ein 2-Kammer Mischkopfsystem anteilig 5 Gewichtsanteile einer insektiziden Komponente mit Kontaktwirkung zugegeben (Permethrin, technischer Wirkstoff). Dieses Verfahren ermöglicht eine äußerst kurze Verweildauer des Wirkstoffs unter Temperaturbedingungen von ca. 75 °C. Die fertige Masse wird bei einem Auftragsgewicht von 125 g/m² auf eine bahnförmige silikonisierte 100 µ Polyester-Folie beschichtet. Eine Abdeckung in Form einer nicht-silikonisierten Polyester-Folie (36 µ) wird zukaschiert. Diese ist rückseitig mit einer witterungsbeständigen, selbstklebenden Haftschicht versehen. In einem Kühltunnel wird die Polymermatrix nun auf 16°C abgekühlt (Einleiten des Geliervorgangs) und so abgegittert, daß kreisrunde (12 mm Durchmesser), sogenannte "*Attract & Kill Dots*" entstehen. Das bahnförmige Material wird in 60 mm x 100 mm große Stücke gestanzt und in aromadichten Verbundpackstoff (SURLYN, erhältlich bei NAPIAG) eingesiegelt. Jede Karte enthält 15 "*Attract & Kill Dots*", die nach dem Abtrennen von der 100 µ PET-Folie einzeln an den zu schützenden Kulturpflanzen befestigt werden können.

## Patentansprüche

1. Flächige, Pigmente enthaltende, lockaktive Insektenvernichtungssysteme, **dadurch gekennzeichnet, daß** die darin enthaltenen foto- und filteraktiven Pigmente durch Emission eines Lichtspektrums mit definierter Wellenlänge eine weibchenspezifische Lockwirkung auf lästige und/oder schädliche Insekten ausüben, wobei als filteraktive Pigmente Lithopone, Calciumsilikate, Zinkoxid oder Titanoxid verwendet werden.

2. Systeme nach Anspruch 1, **dadurch gekennzeichnet, daß** die Wellenlänge des emittierten Lichtspektrums in einem Bereich zwischen 340 und 610 nm liegt.

3. Systeme nach einem oder mehreren der vorangehenden Ansprüche, **dadurch gekennzeichnet, daß** als fotoaktive Pigmente solche aus der Gruppe der Erdalkalialuminate verwendet werden.

4. Systeme nach einem oder mehreren der vorangehenden Ansprüche, **dadurch gekennzeichnet, daß** die Pigmente in einer ein- oder mehrschichtigen Polymermatrix vorliegen.

5. Systeme nach einem oder mehreren der vorangehenden Ansprüche, **dadurch gekennzeichnet, daß** die Polymermatrix haftklebend ausgerüstet und somit zum Festhalten von Insekten geeignet ist.

6. Systeme nach einem oder mehreren der vorangehenden Ansprüche, **dadurch gekennzeichnet, daß** die Pigmente enthaltende Polymermatrix insektizide Wirkstoffe enthält und somit zum Vernichten von Insekten geeignet ist.

7. Systeme nach einem oder mehreren der vorangehenden Ansprüche, **dadurch gekennzeichnet, daß** die Polmermatrix eine Controlled Release Formulierung ist.

8. Systeme nach einem oder mehreren der vorangehenden Ansprüche, **dadurch gekennzeichnet, daß** die flächigen Systeme durch Falten in diverse geometrische Formen überführt und vorzugsweise als Gehäuse eingesetzt werden können.

9. Systeme nach einem oder mehreren der vorangehenden Ansprüche, **dadurch gekennzeichnet, daß** sie zum Vernichten von Insektenweibchen der Ordnungen Lepidoptera, Diptera, Coleoptera, Homoptera, Heteroptera und Apterygota dienen.

## Claims

1. Laminar attractant-active insect destruction systems comprising pigments, **characterized in that** the photo- and filter-active pigments contained therein exert a female-specific attractant action on annoying and/or harmful insects by emission of a light spectrum having a defined wavelength, the filter-active pigments used being lithopones, calcium silicates, zinc oxide or titanium oxide.

2. Systems according to Claim 1, **characterized in that** the wavelength of the emitted light spectrum is in a range between 340 and 610 nm.

3. Systems according to one or more of the preceding claims, **characterized in that** the photoactive pigments used are those from the group consisting of the alkaline earth aluminates.

4. Systems according to one or more of the preceding claims, **characterized in that** the pigments are present in a single- or multilayer polymer matrix.

5. Systems according to one or more of the preceding claims, **characterized in that** the polymer matrix is provided in contact adhesive form and is thus suitable for the retention of insects.

6. Systems according to one or more of the preceding claims, **characterized in that** the polymer matrix comprising pigments contains insecticidal active compounds and is thus suitable for destroying insects.

7. Systems according to one or more of the preceding claims, **characterized in that** the polymer matrix is a controlled release formulation.

8. Systems according to one or more of the preceding claims, **characterized in that** the laminar systems can be converted into various geometrical shapes by folding and can preferably be employed as a housing.

9. Systems according to one or more of the preceding claims, **characterized in that** they are used for destroying female insects of the orders Lepidoptera, Diptera, Coleoptera, Homoptera, Heteroptera and Apterygota.

## Revendications

1. Systèmes d'élimination d'insectes à activité d'appât, plans, renfermant des pigments, **caractérisés en ce que** les pigments contenus photoactifs et possédant une activité de filtre exercent, par émission d'un spectre de lumière d'une longueur d'onde définie, un effet d'appât spécifique de femelles sur les insectes nuisibles et/ou gênants, en utilisant en tant que pigments à activité filtre les lithopones, les silicates de calcium, l'oxyde de zinc ou l'oxyde de titane.

2. Systèmes selon la revendication 1, **caractérisés en ce que** la longueur d'onde du spectre de lumière émis se situe dans le domaine de compris entre 340 et 610 nm.

3. Systèmes selon une ou plusieurs des revendications précédentes, **caractérisés en ce qu'**on utilise en tant que pigments photoactifs des pigments du groupe des aluminates de métaux alcalino-terreux.

4. Systèmes selon une ou plusieurs des revendications précédentes, **caractérisés, en ce que** les pigments se présentent dans une matrice polymère monocouche ou multicouche.

5. Systèmes selon une ou plusieurs des revendications précédentes, **caractérisés en ce que** la matrice polymère est pourvue de pouvoir adhésif et donc appropriée pour fixer les insectes.

6. Systèmes selon une ou plusieurs des revendications précédentes, **caractérisés en ce que** la matrice polymère renfermant des pigments contient des matières actives insecticides et, par conséquent, est appropriée pour l'élimination d'insectes.

7. Systèmes selon une ou plusieurs des revendications précédentes, **caractérisés en ce que** la matrice polymère est une formulation à libération contrôlée.

8. Systèmes selon une ou plusieurs des revendications précédentes, **caractérisés en ce que** les systèmes plans peuvent être transformés par pliage en formes géométriques diverses et utilisés de préférence comme boîtiers.

9. Systèmes selon une ou plusieurs des revendications précédentes, **caractérisés, en ce qu'**ils sont utilisés pour l'élimination des femelles d'insectes des ordres lépidoptères, diptères, coléoptères, homoptères, hétéroptères et aptérygotes.
